(19) Europäisches Patentamt

European Patent Office

Office européen des brevets

(11) Publication number: **0 373 935**
**A2**

## EUROPEAN PATENT APPLICATION

(21) Application number: 89313089.8

(51) Int. Cl.5: **G06K 7/10**

(22) Date of filing: **14.12.89**

(30) Priority: **15.12.88 US 284643**.

(43) Date of publication of application:
**20.06.90 Bulletin 90/25**

(84) Designated Contracting States:
**DE FR GB**

(71) Applicant: **NCR CORPORATION**
**World Headquarters**
**Dayton, Ohio 45479(US)**

(72) Inventor: **Wike, Charles Kenneth, Jr.**
**59635 Heskett Drive**
**Cambridge Ohio 43725(US)**

(74) Representative: **Robinson, Robert George**
**International Patent Department NCR Limited**
**915 High Road North Finchley**
**London N12 8QJ(GB)**

(54) **Hand-held bar code reader.**

(57) A hand-held laser bar code reader includes an elongated casing (21), and scanning means mounted in the casing (21) for scanning a coded label on a purchased merchandise item through a front end of the casing (21). A strap (60) attached to the casing (21) attaches the reader to the underside of the wrist of an operator. Switch means (73,74) are remotely positioned from the casing (21), the switch means comprising a ring member (73) which fits on the forefinger of one of the operator's hands and a press button switch member (74) which is adapted to be operated by the thumb of the same hand. A cable connects the switch means to the scanning means. By this arrangement, the operator can use both hands for moving the merchandise item across a checkout counter while simultaneously operating the reader to scan the coded label, thereby minimizing the checkout time.

FIG. 4

# HAND-HELD BAR CODE READER

This invention relates to hand-held bar code readers.

Present checkout systems found in retail or supermarket stores include a point-of-sale terminal device positioned adjacent a checkout counter which includes an optical scanning device for scanning a bar code pattern on a label attached to a purchased merchandise item. The scanning device generates signals which represent the coded data on the label and which are used to generate the price of the purchased item. Commonly known types of hand-held bar code readers have required that the operator use one hand to hold the reader while utilizing the other hand to hold the purchased merchandise item in a position allowing the reader to scan the coded label on the item.

From U.S Patent No. 4766299 there is known a hand-held bar code reader having a casing of flattened design in which is mounted scanning means for scanning a bar code, the reader being adapted to be attached by means of a strap to the back of an operator's hand. A switch associated with the reader is adapted to be switched on and off by deliberate flexing of muscles in the operator's hand. The operator can cause the bar code to be scanned by pointing his hand carrying the reader at the bar code, and flexing his hand so as to switch on the switch. The attachment of the reader to the back of the operator's hand and the need for the operator to flex this hand, e.g. by clenching it into a fist, while carrying out a scanning operation, makes it difficult, if not impossible, for the operator to use this hand to handle an item carrying the coded label while scanning the label.

It is an object of the invention to provide a hand-held optical bar code reader which facilitates the scanning of a coded label on a purchased merchandise item.

According to the invention there is provided a hand-held optical bar code reader characterized by an elongated casing, scanning means mounted in said casing for scanning a bar code on a purchased merchandise item through a front end of said casing, attachment means attached to said casing for attaching said casing to the underside of the wrist of an operator, and switch means remotely positioned from said casing and coupled to said scanning means, said switch means being adapted to be actuated by a finger of the operator for operating said scanning means.

One embodiment of the invention will now be described by way of example with reference to the accompanying drawings, in which:-

Fig. 1 is a perspective view of an optical bar code reader in accordance with the present invention showing details of the scanning unit;

Fig. 2 is a side view of the bar code reader showing the location of plug-in sockets associated with a control ring and the transfer of data from the bar code reader, together with a strap connection;

Fig. 3 is a diagrammatic view of the elements comprising the scanning unit associated with the bar code reader;

Fig. 4 is a pictorial representation showing the bar code reader attached to the wrist of a checkout operator by means of the strap, the control ring being shown mounted on a finger of the operator; and

Fig. 5 is a perspective view of the control ring comprising an on/off switch which is worn on the forefinger of the hand of the operator and operated by the thumb of the same hand.

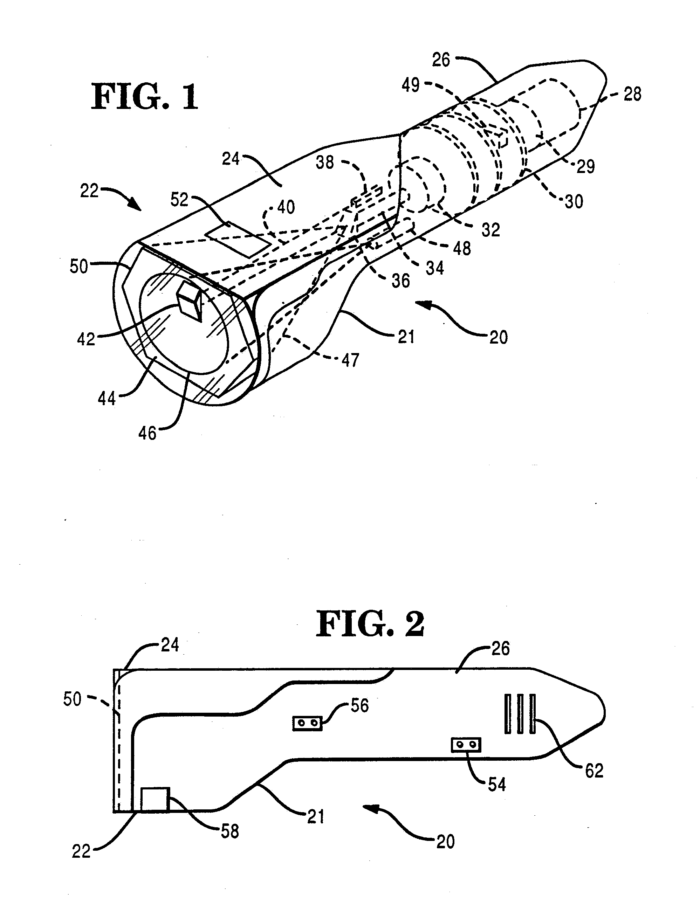

Referring to Fig. 1, the optical bar code reader shown therein is generally indicated by the numeral 20 and comprises an elongated casing 21 which includes a front portion 22, the top of which comprises a rearwardly extending flat surface 24 which terminates at a handle portion 26 of the reader 20. The casing 21 generally has the configuration of a flashlight casing as seen in Fig. 2. The front portion 22 of the reader 20 has a greater cross-sectional area than the cross-sectional area of the handle portion 26, and includes much of the optics for projecting light beams in a scanning direction through the front end of the casing 21. The handle portion 26 includes a power supply 28, a radio transmitter 29, a series of electrical rack members 30, and a drive motor 32 which rotates a drive shaft 34 having a scanning mirror 36 attached to its end, the drive shaft 34 being mounted so as to be substantially coaxial with respect to the casing 21. Located adjacent the shaft 34 is a laser device 38 which in a laser diode member and which projects a laser light beam 40 along a first axis directed towards a lens member 42. The lens member 42 comprises a pair of mirrors which turn and project the received light beam in the opposite direction towards the scanning mirror 36 along a second axis which is the axis of the casing 21 and which is parallel to the first axis. Rotation of the scanning mirror 36 deflects the light beam in sequence to a plurality of mirrors 44 mounted around the inside periphery of the front portion 22 of the casing 21. In the present embodiment there are six mirrors 44 mounted in the casing 21. The mirrors 44 deflect the scanning light beams received from the scanning mirror 36 towards a coded label (not shown) on a purchased merchandise item. The light reflected from the coded label is collected by a collection mirror 46 to which the lens member 42 is secured. The mirror 46 focuses the reflected light beams at a photodetector 48 which in turn converts the received light beams into electrical signals. The lens member 42 and the collection mirror 46 are mounted on a glass face member 50 (Fig. 2) which is mounted in the front portion 22 of the reader 20 and through which the scanning light beams are projected. The electrical signals generated by the photodetector 48 are transmitted to a processing member 49 mounted on one of the electrical rack members 30 which decodes the electrical signals producing data which is used to address a lookup table located in a remote processing unit (not shown). The transmitter 29 may transmit the data to a remote pickup from which the data may be transferred to the remote processing unit. Located in the flat surface 24 of the casing 21 is a display panel 52 which may display information indicating whether there was a good or bad read operation performed by the last scanning operation in a manner that is well known in the art.

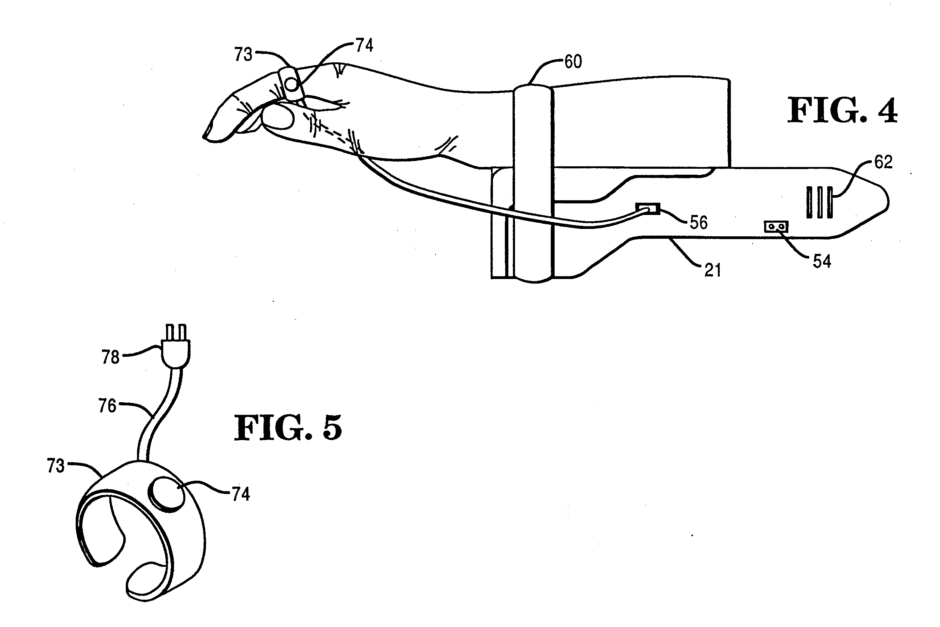

Referring to Fig. 2, there is shown a side view of the optical bar code reader 20 which includes a first plug-in socket 54 for accommodating a communication cable for transferring the data generated by the processing member 49 in the reader 20 to a remote processing unit (not shown) for performing a price lookup operation, and a second plug-in socket 56 to which is attached a remote switch member in the form of a ring member 73 (Fig. 5) and actuated by the checkout operator for operating the bar code reader 20 in a manner to be described more fully hereinafter. There is further located on the lower edge of the front portion 22 of the bar code reader 20 an attachment member 58 which may be used with a velcro type strap member 60 (Fig. 4). Located at the rear end of the handle portion 26 is an audible tone port 62 in which tone signals are generated indicating whether the scanning operation has resulted in a good or bad reading of the coded label.

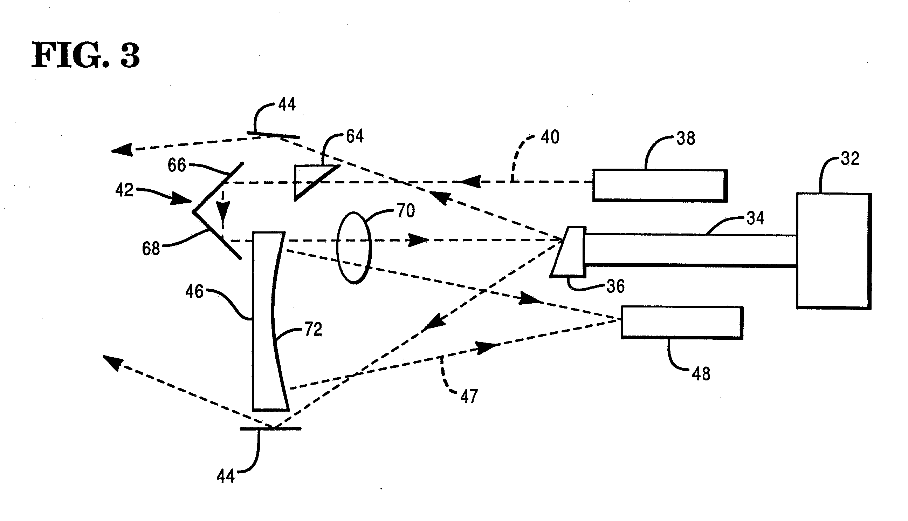

Referring now to Fig. 3, there is shown a diagrammatic representation of the elements comprising the scanning unit of the bar code reader 20, which includes the motor 32 rotating the drive shaft 34 with the scanning mirror 36 attached to the end of the shaft 34. Mounted adjacent the shaft 34 are the laser diode member 38 and the detector member 48. The collimated, asymmetric laser light beam 40 outputted by the laser diode member 38 is transmitted through a prism 64 which serves to circularize the beam and directs the light beam along a first axis to the lens member 42 comprising the mirrors 66, 68. From the lens member 42 the light beam is directed in the opposite direction along the axis of the casing 21 through a focusing lens 70 which focuses the light beam on the surface of the scanning mirror 36. Rotation of the scanning mirror 36 directs the light beam 40 in sequence to the six mirrors 44 which reflect the scanning light beam at the coded label in the form of a plurality of scan lines (not shown) for scanning the coded label. The reflected light beams from the coded label are then collected by the vertical surface of the collection mirror 46 with the concave surface 72 directing the light beams 47 towards the detector 48, which in turn generates electrical signals in accordance with the intensity level of the light beams received from the collection mirror 46.

Referring now to Fig. 4, there is shown a pictorial view of the bar code reader 20 positioned adjacent the underside of the checkout operator's wrist in which the strap 60, which may be of velcro construction, secures the wrist to the bar code reader 20. The strap 60 is secured to the casing 21 at the attachment member 58 (Fig. 2). The ring member 73 is adapted to be mounted on the forefinger of the operator and has a button 74 which extends outwardly from the ring 73 and which, when depressed by the thumb of the same hand of the operator as that on which the ring 73 is mounted, will operate the bar code reader 20 for a scanning operation. The ring member 73 (Fig. 5) is attached to an electrical cable 76 which terminates in a plug 78 which is inserted in the plug socket 56 (Fig. 2) of the bar reader 20 enabling the button 74 to control the operation of the bar code reader 20.

It should be understood that the reader 20 described above with reference to the accompanying drawings has the advantage that scanning of a coded label on a purchased merchandise item is facilitated, since with the reader 20 strapped against the underside of one of his or her wrists as described above, the checkout operator can use both hands for moving the item across the checkout counter while simultaneously operating the reader 20 to scan the coded label. This arrangement allows the checkout operation to be completed in a minimal amount of time. Also, the reader is simple in construction and low in cost.

## Claims

1. A hand-held optical bar code reader (20) characterized by an elongated casing (21), scanning means (32,36,44,46) mounted in said casing (21) for scanning a bar code on a purchased merchandise item through a front end of said casing, attachment means (60) attached to said casing for attaching said casing to the underside of the wrist of an operator, and switch means (73, 74) remotely positioned from said casing and coupled to said scanning means, said switch means being adapted to be actuated by a finger of the operator for operating said scanning means.

2. A reader according to claim 1, characterized in that said casing (21) includes a flat portion (24) against which in operation the underside of the wrist of the operator is held by means of said attachment means (60)

3. A reader according to either claim 1 or claim 2, characterized in that said switch means includes an actuating member 74 mounted on a ring member (73), said ring member being adapted to be mounted on one of the fingers of the operator whereby said actuating member may be actuated by another finger of the same hand of the operator to operate said scanning means (32, 36, 44, 46).

4. A reader according to claim 3, characterized in that said actuating member (74) extends outwardly from said ring member (75) and is arranged to be depressed for the purpose of operating said scanning means (32,36,44,46).

5. A reader according to either claim 3 or 4, characterized in that said casing (21) includes an electrical socket member (56) coupled to said scanning means (32,26,44,46), said switch means (73,74) including an electrical cable (76) for connecting said socket member to said actuating member (74).

6. A reader according to any one of the preceding claims, characterized in that said scanning means include means (38) for outputting a scanning light beam, optical means (42) for directing said light beam to a first mirror (36) which is mounted on a motor driven drive shaft (34) mounted in said casing (21) and which is arranged in operation to deflect said light beam in sequence to a plurality of second mirrors mounted around the inside periphery of said casing (21), said second mirrors serving to deflect said light beam so as to scan said bar code.

7. A reader according to claim 6, characterized in that said drive shaft (34) is mounted so as to be substantially coaxial with respect to said casing (21).

8. A reader according to any one of the preceding claims, characterized in that said casing (21) generally has the configuration of a flashlight casing.

9. A reader according to claim 8, characterized in that a front end portion (22) of said casing (21) has a cross-sectional area greater than that of a rear end portion (26) of said casing.

10. A reader according to any one of the preceding claims, characterized in that said means for outputting said scanning light beam is a laser device.

FIG. 1

FIG. 2

# FIG. 3

EP 0 373 935 A2

**FIG. 4**

73 74 60

62

56

21 54

78

76

**FIG. 5**

73

74

EP 0 373 935 A2